(19) Europäisches Patentamt
European Patent Office
Office européen des brevets

(11) EP 2 643 359 B1

(12) **FASCICULE DE BREVET EUROPEEN**

(45) Date de publication et mention de la délivrance du brevet:
**07.01.2015 Bulletin 2015/02**

(21) Numéro de dépôt: **11790585.1**

(22) Date de dépôt: **23.11.2011**

(51) Int Cl.:
***C08C 19/44*** (2006.01) ***C08L 15/00*** (2006.01)
***C08L 53/02*** (2006.01)

(86) Numéro de dépôt international:
**PCT/EP2011/070745**

(87) Numéro de publication internationale:
**WO 2012/069509 (31.05.2012 Gazette 2012/22)**

(54) **ELASTOMÈRE DIÉNIQUE À BLOCS À IP FAIBLE FONCTIONNEL À FLUAGE À FROID AMÉLIORÉ ET COMPOSITION DE CAOUTCHOUC LE CONTENANT**

FUNKTIONELLES DIENBLOCK-ELASTOMER MIT NIEDRIGEM PI UND VERBESSERTER KÄLTEFLIESSFÄHIGKEIT UND DIESES ENTHALTENDE KAUTSCHUKZUSAMMENSETZUNG

FUNCTIONAL DIENE BLOCK ELASTOMER WITH A LOW PI AND IMPROVED COLD FLOW, AND RUBBER COMPOSITION CONTAINING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2010 FR 1059644**

(43) Date de publication de la demande:
**02.10.2013 Bulletin 2013/40**

(73) Titulaires:
- **Compagnie Générale des Etablissements Michelin**
  **63000 Clermont-Ferrand (FR)**
- **MICHELIN Recherche et Technique S.A.**
  **1763 Granges-Paccot (CH)**

(72) Inventeurs:
- **ABAD, Mathilde**
  **F-63040 Clermont-ferrand Cedex 09 (FR)**
- **DORATO, Margarita**
  **F-63040 Clermont-ferrand Cedex 09 (FR)**
- **FAVROT, Jean-Michel**
  **F-63040 Clermont-ferrand Cedex 09 (FR)**
- **SIMON, Nathalie**
  **F-63040 Clermont-ferrand Cedex 09 (FR)**
- **MARECHAL, Jean Marc**
  **F-63040 Clermont-ferrand Cedex 09 (FR)**
- **DE LANDTSHEER, Stéphanie**
  **F-63040 Clermont-ferrand Cedex 09 (FR)**

(74) Mandataire: **Le Cam, Véronique Marie Christine**
**Manufacture Française des Pneumatiques Michelin**
**23 Place des Carmes-Déchaux**
**SGD/LG/PI - F35 - Ladoux**
**63040 Clermont-Ferrand Cedex (FR)**

(56) Documents cités:
**EP-A2- 1 448 647** **WO-A1-01/81439**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 643 359 B1

## Description

La présente invention se rapporte à un élastomère diénique fonctionnalisé composé d'un copolymère à blocs fonctionnalisé spécifique, d'un copolymère à blocs étoilé spécifique et d'un taux inférieur à 15% en poids d'un copolymère à blocs non fonctionnel étain spécifique.

La réduction de l'hystérèse des mélanges est un objectif permanent de l'industrie du pneumatique afin de limiter la consommation d'essence et de préserver ainsi l'environnement. Cette réduction d'hystérèse doit toutefois se faire en conservant intacte, voire en améliorant l'aptitude à la mise en oeuvre des mélanges.

Pour atteindre l'objectif de baisse d'hystérèse, de nombreuses solutions ont déjà été expérimentées. En particulier, la fonctionnalisation des polymères par une fonction interactive avec la charge renforçante est apparue comme une voie intéressante.

Des fonctions interactives avec la charge ont ainsi été adjointes en extrémité de chaîne en début ou fin de polymérisation au moyen d'amorceurs fonctionnels ou d'agents de fonctionnalisation. A titre d'exemple, la 4,4'-bis-(diéthylaminobenzophénone), encore appelée DEAB, ou d'autres fonctions aminées qui interagissent avec le noir de carbone ont été adjointes en fin de polymérisation comme décrit dans les documents de brevet FR2526030 et US4848511. Les polymères couplés ou étoilés à l'étain contiennent des fonctions susceptibles d'interagir avec le noir de carbone introduites en fin de polymérisation. A titre d'exemple, on peut citer le document de brevet européen EP0709235. Des fonctions interagissant avec la silice ont également été adjointes en extrémité de chaîne en fin de polymérisation, telles que des fonctions contenant un groupe silanol divulguées dans le document de brevet FR2740778 ou des fonctions contenant des groupes alkoxysilane ou aryloxysilane décrits dans le document US5066721. La plupart de ces solutions, tant pour le noir que pour la silice, conduit réellement à une limitation d'hystérèse des compositions correspondantes mais concomitamment à une plus grande difficulté de mise en oeuvre de ces mêmes compositions.

Le brevet EP 1278789 décrit un copolymère à n blocs (n = 2 ou 3) destiné à former une matrice élastomère d'une composition de caoutchouc réticulable, chacun desdits blocs comprenant un élastomère diénique essentiellement insaturé, et l'un ou chacun desdits blocs formant extrémité de chaîne dudit copolymère étant constitué d'un polyisoprène. La masse moléculaire moyenne en nombre du bloc polyisoprène est comprise entre 2 500 et 20 000 g/mol, et la masse moléculaire moyenne en nombre du bloc du copolymère qui est autre que ledit bloc polyisoprène est sensiblement comprise entre 80 000 g/mol et 350 000 g/mol. L'utilisation dudit copolymère à blocs permet d'optimiser d'une manière significative les résultats de réduction d'hystérèse et d'aptitude à la mise en oeuvre pour ladite composition de caoutchouc le contenant.

Il est également connu que les polymères à distributions moléculaires étroites confèrent aux compositions de caoutchouc les contenant une hystérèse réduite. En particulier, les élastomères diéniques fonctionnels linéaires avec des distributions moléculaires étroites avant fonctionnalisation présentent des propriétés hystérétiques améliorées. Cependant, ces élastomères présentent un fluage à froid accru par rapport aux mêmes élastomères présentant une distribution moléculaire large avant fonctionnalisation, ce qui est pénalisant pour le stockage et le transport des élastomères.

Afin de diminuer le fluage à froid, de nombreuses solutions existent. L'ouvrage « Nouvelles Recherches dans le Domaine des Composés Macromoléculaires Editor(s): Ceausescu E Oxford, Pergamon Press Ltd., 1984, p.343-56. 72 » cite des méthodes de réduction du fluage à froid telles que l'augmentation de la masse moléculaire, l'étoilage ou le degré de branchement. Mais l'augmentation de la masse moléculaire pénalise fortement la mise en oeuvre des mélanges alors que le branchement s'accompagne d'une augmentation de l'hystérèse des mélanges. Par ailleurs, étonnamment, les polymères uniquement étoilés étain (3 ou 4 branches) sont davantage hystérétiques comparativement aux polymères couplés étain.

Pour résoudre le problème de fluage à froid, il est également connu que l'indice de polydispersité de l'élastomère peut être augmenté. Toutefois, cela n'est pas sans effet sur les propriétés des compositions de caoutchouc le contenant, en particulier sur l'hystérèse ou la facilité de mise en oeuvre des mélanges par exemple.

Il existe donc un besoin de fournir un élastomère qui confère à une composition de caoutchouc renforcée de bonnes propriétés d'hystérèse et de mise en oeuvre en vue d'une application en pneumatique, tout en présentant un fluage à froid réduit dans l'optique d'une meilleure tenue lors du stockage et du transport du caoutchouc.

La demanderesse a découvert de façon surprenante qu'un élastomère diénique fonctionnalisé composé d'un copolymère à blocs fonctionnalisé en extrémité de chaîne ou en milieu de chaîne par une fonction étain, présentant une distribution de masse moléculaire étroite avant fonctionnalisation ou couplage, et d'un copolymère à blocs étoilé avec un composé contenant de l'étain, présentant une distribution de masse moléculaire étroite avant étoilage et contenant moins de 15% en poids par rapport au poids total de l'élastomère diénique fonctionnalisé de copolymères à bloc non fonctionnel étain confère à une composition de caoutchouc le contenant des propriétés de caoutchouterie, et en particulier des propriétés hystérétiques et de mise en oeuvre, tout à fait acceptables pour une utilisation en pneumatique, tout en présentant une résistance au fluage à froid significativement améliorée.

L'invention a donc pour objet un élastomère diénique fonctionnalisé composé :

a) d'un copolymère à blocs fonctionnalisé en extrémité de chaîne ou en milieu de chaîne par une fonction étain et répondant à la formule suivante :

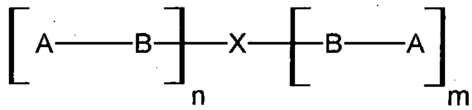

où n et m sont des entiers supérieurs ou égaux à 0 et tels que n+m=1 ou 2.

b) d'un copolymère à blocs étoilé étain répondant à la formule suivante :

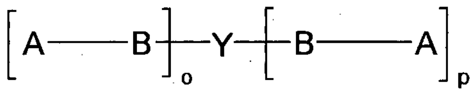

où o et p sont des entiers supérieurs ou égaux à 0 et tels que 0+p≥3 et o+p≤6,

c) d'un taux inférieur à 15% en poids par rapport au poids total de l'élastomère diénique fonctionnalisé d'un copolymère à blocs non fonctionnel étain répondant à la formule suivante :

[A-B]

Où:

- tous les blocs A sont constitués d'un polyisoprène ou tous les blocs A sont constitués d'un polybutadiène,
- les blocs B sont constitués d'un élastomère diénique dont le taux molaire d'unités issues de diènes conjugués est supérieur à 15%, les blocs B étant identiques entre eux,
- X et Y représentent indépendamment un groupe contenant de l'étain,
- la masse moléculaire moyenne en nombre Mn1 de chaque bloc A varie de 2 500 à 20 000 g/mol,
- la masse moléculaire moyenne en nombre Mn2 de chaque bloc B varie de 80 000 à 350 000 g/mol,
- le taux d'enchaînements 1,2 dans chaque bloc A est compris entre 1 et 20% dans le cas où A est un bloc polybutadiène,
- le taux d'enchaînements 3,4 dans chaque bloc A est compris entre 1 et 25% dans le cas où A est un bloc polyisoprène,
- le copolymère A-B présente une distribution de masses moléculaires monomodale avant fonctionnalisation éventuelle ou étoilage éventuel et un indice de polydispersité avant fonctionnalisation éventuelle ou étoilage éventuel inférieur ou égal à 1,3.

Par indice de polydispersité, on entend au sens de l'invention le rapport masse moléculaire moyenne en poids/masse moléculaire moyenne en nombre.

A titre préférentiel, l'élastomère diénique fonctionnalisé selon l'invention comprend de 5% à 45% en poids, préférentiellement de 10% à 30% en poids par rapport au poids total de l'élastomère diénique fonctionnalisé dudit copolymère à blocs étoilé étain b).

A titre préférentiel, l'élastomère diénique fonctionnalisé selon l'invention comprend un taux strictement supérieur à 0% en poids et inférieur à 10% en poids par rapport au poids total de l'élastomère diénique fonctionnalisé dudit copolymère à blocs non fonctionnel étain c). Préférentiellement, l'élastomère diénique fonctionnalisé selon l'invention comprend un taux inférieur à 5% en poids par rapport au poids total de l'élastomère diénique fonctionnalisé dudit copolymère à blocs non fonctionnel étain c).

Dans la présente description, on entend par élastomère diénique fonctionnalisé un élastomère diénique qui comporte un groupement comprenant un ou plusieurs hétéroatomes.

Ce groupement peut se situer en bout de la chaîne ou extrémité de la chaîne constituée par le bloc B autre que le bloc polyisoprène ou polybutadiène A (m+n=1, m et n étant définis tels que précédemment). On dira alors que l'élastomère diénique est fonctionnalisé en bout de ladite chaîne. C'est généralement un élastomère obtenu par réaction d'un élastomère vivant sur un agent de fonctionnalisation, c'est-à-dire toute molécule au moins monofonctionnelle, la fonction étant tout type de groupement chimique connu par l'homme de l'art pour réagir avec un bout de chaîne vivant.

Ce groupement peut se situer dans la chaîne élastomère principale linéaire entre deux blocs B autres que les blocs polyisoprène ou polybutadiène A (m+n=2, m et n étant définis tels que précédemment). On dira alors que l'élastomère diénique est couplé ou encore fonctionnalisé en milieu de ladite chaîne, par opposition à la position "en bout de chaîne" et bien que le groupement ne se situe pas précisément au milieu de ladite chaîne élastomère. C'est généralement

un élastomère obtenu par réaction d'un élastomère vivant sur un agent de couplage, c'est à dire toute molécule au moins difonctionnelle, la fonction étant tout type de groupement chimique connu par l'homme de l'art pour réagir avec un bout de chaîne vivant.

Ce groupement peut être central auquel o+p chaînes élastomères ou branches A-B (o, p et A-B étant définis tels que précédemment) sont liées formant une structure en étoile de l'élastomère. On dira alors que l'élastomère diénique est étoilé. C'est généralement un élastomère obtenu par réaction d'un élastomère vivant sur un agent d'étoilage, c'est à dire toute molécule multifonctionnelle, la fonction étant tout type de groupement chimique connu par l'homme de l'art pour réagir avec un bout de chaîne vivant.

Comme expliqué précédemment, le copolymère à blocs a) est fonctionnalisé en extrémité ou en milieu de la chaîne constituée par une fonction étain. La fonctionnalisation peut être obtenue avec un agent de fonctionnalisation mono-halogénoétain ou de couplage di-halogénoétain pouvant répondre à la formule générale $R_{4-x}SnX^0{}_x$, où x représente un entier de valeur 1 ou 2, R représente un radical alkyle, cycloalkyle, aryle, alkaryle ou vinyle ayant de 1 à 12 atomes de carbone, de préférence un butyle, et $X^0$ est un atome d'halogène, de préférence le chlore. A titre d'agent de fonctionnalisation préféré, on peut citer le monochlorure de tributyl étain ou le dichlorure de dibutyl étain. De la même manière, la fonctionnalisation peut être obtenue avec un agent de fonctionnalisation dérivé de l'étain pouvant répondre à la formule générale $(X^1{}_yR^1{}_{3-y}Sn)$-O-$(SnR^1{}_{3-z}X^1{}_z)$ ou $(X^1{}_y\ R^1{}_{3-y}Sn)$-O-$(CH2)_e$-O-$(SnR^1{}_{3-z}X^1{}_z)$, où y et z représentent des entiers compris entre 0 et 2 et y+z égal à 1 ou 2, $R^1$ représente un radical alkyle, cycloalkyle, aryle, alkaryle ou vinyle ayant de 1 à 12 atomes de carbone, de préférence un butyle, $X^1$ est un atome d'halogène, de préférence le chlore, et e représente un entier de 1 à 20, de préférence 4.

Selon l'invention, le copolymère à blocs b) est étoilé. De préférence, l'élastomère diénique b) est étoilé par une fonction étain. L'étoilage peut être obtenu avec un agent d'étoilage tri ou tétra-halogénoétain pouvant répondre à la formule $R^2{}_qSnX^2{}_{4-q}$, où q représente un entier de valeur 0 ou 1, $R^2$ représente un radical alkyle, cycloalkyle, aryle, alkaryle ou vinyle ayant de 1 à 12 atomes de carbone, de préférence un butyle, et $X^2$ est un atome d'halogène, de préférence le chlore. A titre d'agent d'étoilage préféré, on peut citer le trichlorure de butyl étain ou le tétrachlorure d'étain. De la même manière, l'étoilage peut être obtenu avec un agent de fonctionnalisation dérivé de l'étain pouvant répondre à la formule générale $(X^3{}_kR^3{}_{3-k}Sn)$-O-$(SnR^3{}_{3-1}X^3{}_1)$ ou $(X^3{}_kR^3{}_{3-k}Sn)$-O-$(CH2)_f$-O-$(SnR^3{}_{3-1}X^3{}_1)$, où k et 1 représentent des entiers compris entre 0 et 3, k+1 des entiers compris entre 3 et 6, $R^3$ représente un radical alkyle, cycloalkyle, aryle, alkaryle ou vinyle ayant de 1 à 12 atomes de carbone, de préférence une butyle, $X^3$ est un atome d'halogène, de préférence le chlore et f représente un entier de valeur de 1 à 20 de préférence 4.

Selon un mode de réalisation préféré, le copolymère à blocs a) est un copolymère fonctionnalisé par une fonction étain en milieu de chaîne.

Selon un autre mode de réalisation préféré, le copolymère à blocs b) est un copolymère étoilé étain à 4 branches.

Selon un autre mode de réalisation préféré, le copolymère à blocs a) est une copolymère fonctionnalisé par une fonction étain en milieu de chaîne et le copolymère à blocs b) est un copolymère étoilé étain à 4 branches.

De préférence, le rapport de la masse moléculaire moyenne en nombre Mn1 de chaque bloc polybutadiène ou polyisoprène d'extrémité A sur la masse moléculaire moyenne en nombre Mn2 de chacun des blocs B varie de 5 à 20%.

Comme expliqué précédemment, préférentiellement, le copolymère à blocs étoilé étain représente de 5 à 45%, de préférence de 10 à 30% en poids du poids total de l'élastomère diénique fonctionnalisé.

A titre d'élastomère diénique essentiellement insaturé (i.e. dont le taux molaire d'unités issues de diènes conjugués est supérieur à 15%) susceptible d'être mis en oeuvre pour obtenir ledit bloc B autre que le ou les bloc polybutadiène ou polyisoprène, eux-mêmes répondant à cette définition, on entend tout homopolymère obtenu par polymérisation d'un monomère diène conjugué ayant 4 à 12 atomes de carbone, ou tout copolymère à bloc, statistique, séquencé ou microséquencé, obtenu par copolymérisation d'un ou plusieurs diènes conjugués entre eux ou avec un ou plusieurs composés vinylaromatiques ayant de 8 à 20 atomes de carbone.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

A titre préférentiel, le ou les blocs B sont choisis parmi les copolymères du styrène et du butadiène, les copolymères du styrène et de l'isoprène, les copolymères du butadiène et de l'isoprène, les terpolymères de styrène/butadiène/isoprène, le polyisoprène lorsque le bloc A voisin est un polybutadiène, et le polybutadiène lorsque le bloc A voisin est un polyisoprène.

Conviennent les polybutadiènes et en particulier ceux ayant une teneur (% molaire) en unités -1,2 comprise entre 4% et 80%, les polyisoprènes, les copolymères de butadiène-styrène et en particulier ceux ayant une Tg (température de transition vitreuse Tg, mesurée selon ASTM D3418) comprise entre 0°C et - 70°C et plus particulièrement entre 10°C et - 60°C, une teneur en styrène comprise entre 5% et 60% en poids et plus particulièrement entre 20% et

50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre 5 °C et - 55°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans - 1,4 de la partie isoprénique comprise entre 10% et 50%, et plus généralement tout copolymère butadiène-styrène-isoprène ayant une Tg comprise entre - 5°C et - 70°C.

Préférentiellement, le ou les blocs B sont choisis parmi les copolymères du styrène et du butadiène, les copolymères du styrène et de l'isoprène, le polyisoprène lorsque le bloc A voisin est un polybutadiène, et le polybutadiène lorsque le bloc A voisin est un polyisoprène. Et plus préférentiellement, le ou les blocs B sont choisis parmi les copolymères du styrène et du butadiène.

Selon un mode de réalisation particulièrement préféré, A est le polyisoprène, B est un copolymère du styrène et du butadiène, le copolymère à blocs a) étant fonctionnalisé par l'agent de fonctionnalisation $Bu_2SnCl_2$ et le copolymère à blocs b) étant étoilé par l'agent d'étoilage $SnCl_4$.

Selon un autre mode de réalisation particulièrement préféré, A est le polybutadiène, B est un copolymère du styrène et du butadiène, le copolymère à blocs a) étant fonctionnalisé par l'agent de fonctionnalisation dichlorure de dibutyl étain ($Bu_2SnCl_2$) et le copolymère à blocs b) étant étoilé par l'agent d'étoilage tétrachlorure d'étain ($SnCl_4$).

La polymérisation de monomères diéniques est amorcée par un initiateur. En tant qu'initiateur de polymérisation, on peut utiliser tout initiateur anionique monofonctionnel connu. Toutefois un initiateur contenant un métal alcalin tel que le lithium est utilisé à titre préférentiel.

Comme initiateurs organolithiens conviennent notamment ceux comportant une liaison carbone-lithium. De préférence, on utilisera un initiateur organolithien hydrocarboné ne comportant pas d'hétéroatome. Des composés représentatifs sont les organolithiens aliphatiques tels que l'éthyllithium, le n-butyllithium (n-BuLi) et l'isobutyllithium.

La polymérisation est, comme connu en soi, de préférence effectuée en présence d'un solvant inerte qui peut être par exemple un hydrocarbure aliphatique ou alicyclique comme le pentane, l'hexane, l'heptane, l'iso-octane, le cyclohexane ou un hydrocarbure aromatique comme le benzène, le toluène, le xylène.

La polymérisation peut être effectuée en continu ou en discontinu, de préférence en discontinu. On effectue généralement la polymérisation à une température comprise entre 20°C et 120°C et de préférence voisine de 30°C à 90°C. On peut bien entendu également ajouter en fin de polymérisation un agent de transmétallation pour modifier la réactivité de l'extrémité de chaîne vivante.

L'élastomère diénique vivant issu de la polymérisation est ensuite fonctionnalisé pour préparer l'élastomère diénique fonctionnalisé selon l'invention.

Selon un mode de préparation de l'élastomère diénique fonctionnalisé selon l'invention, le copolymère à blocs en extrémité de chaîne vivant peut être préparé en différentes étapes :

- la préparation du bloc polyisoprène ou polybutadiène vivant, et
- la préparation de l'élastomère diénique essentiellement insaturé mis en oeuvre pour obtenir ledit bloc autre que le bloc polybutadiène ou polyisoprène.

Selon ce mode de préparation, la polymérisation de monomères diéniques, isoprène ou butadiène, est amorcée par lesdits initiateurs organolithiens afin d'obtenir un homopolymère diénique polyisoprène ou polybutadiène vivant. L'homopolymère diénique vivant ainsi obtenu est ensuite utilisé comme initiateur (amorceur) pour la préparation de l'élastomère diénique afin d'obtenir un copolymère à bloc vivant.

Le lecteur averti comprendrait que pendant les étapes de préparation, des conditions de mise en oeuvre adéquates doivent être mises en place afin de limiter la formation d'homopolymère diénique polyisoprène ou polybutadiène mort ou désactivé générant ainsi des chaînes de basses masses moléculaires. Une quantité supérieure à 1% en poids de ces chaînes polyisoprène ou polybutadiène pourrait pénaliser les propriétés de l'élastomère diénique fonctionnalisé selon l'invention.

Le copolymère à bloc vivant issu de ce mode de préparation est ensuite fonctionnalisé pour préparer l'élastomère diénique fonctionnalisé selon l'invention.

Selon une première variante de préparation de l'élastomère diénique fonctionnalisé selon l'invention, on mélange le copolymère à blocs fonctionnalisé en extrémité ou en milieu de la chaîne par une fonction étain a) et le copolymère à blocs étoilé b), dans les proportions appropriées.

Le copolymère à blocs a) fonctionnalisé en extrémité ou en milieu de ladite chaîne par une fonction étain peut être obtenu de manière connue en soi par réaction d'un dérivé de l'étain sur l'élastomère diénique vivant issu de la polymérisation.

Le copolymère à blocs étoilé b) peut être obtenu de manière connue en soi par réaction d'un agent d'étoilage contenant de l'étain sur l'élastomère diénique vivant issu de la polymérisation.

Le mélangeage des deux élastomères peut s'effectuer dans un solvant inerte, par exemple un hydrocarbure aliphatique ou alicyclique comme le pentane, l'hexane, l'heptane, l'iso-octane, le cyclohexane ou un hydrocarbure aromatique comme le benzène, le toluène, le xylène, qui peut être le même que le solvant de polymérisation. Le mélangeage est alors effectué à une température de préférence comprise entre 20°C et 120°C, de préférence voisine de 30°C à 90°C.

Selon une deuxième variante de préparation de l'élastomère diénique fonctionnalisé selon l'invention, l'élastomère diénique vivant issu de l'étape de polymérisation est soumis à la réaction d'un agent de fonctionnalisation et à celle d'un agent d'étoilage.

Ainsi, par exemple, la fonctionnalisation de l'élastomère diénique vivant issu de l'étape de polymérisation peut s'effectuer à une température variant de 30°C à 120°C, en présence dans un premier temps d'une quantité appropriée d'un agent d'étoilage pour étoiler de préférence 5% à 45% en poids de l'élastomère vivant. Puis, dans un deuxième temps, les chaînes vivantes restantes de l'élastomère diénique obtenu après la première étape sont fonctionnalisées par adjonction d'un agent de fonctionnalisation à l'étain susceptible d'introduire en extrémité de chaîne ou en milieu de chaîne une fonction étain. La réaction de fonctionnalisation de l'élastomère diénique est ensuite stoppée par la désactivation des chaînes vivantes restantes.

Le lecteur averti comprendrait que pendant les étapes de préparation des copolymères à blocs fonctionnalisé a) et b), des conditions de mise en oeuvre adéquates doivent être mises en place afin de limiter la formation du copolymère c) non fonctionnalisé étain.

L'invention a encore pour objet une composition de caoutchouc renforcée à base d'au moins une charge renforçante et d'une matrice élastomère comprenant au moins un élastomère diénique fonctionnalisé selon l'invention.

La composition peut comprendre de 1 à 100 pce d'élastomère diénique fonctionnalisé selon l'invention.

La composition selon l'invention peut également comprendre au moins un élastomère diénique différent dudit élastomère diénique fonctionnalisé selon l'invention. Ce ou ces élastomères diéniques différents de l'élastomère diénique fonctionnalisé selon l'invention peuvent être choisis parmi les élastomères diéniques conventionnellement utilisés dans les pneus, tel que le caoutchouc naturel ou un élastomère synthétique, ou encore un autre élastomère fonctionnalisé ou étoilé.

On peut utiliser tout type de charge renforçante connue pour ses capacités à renforcer une composition de caoutchouc utilisable pour la fabrication de pneumatiques, par exemple une charge organique renforçante tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375.

On peut aussi utiliser, selon les applications visées, des noirs de séries plus élevées FF, FEF, GPF, SRF, par exemple les noirs N660, N683, N772. Les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Lorsque la composition selon l'invention est destinée à des bandes de roulement de pneumatique à faible résistance au roulement, la charge inorganique renforçante utilisée, en particulier s'il s'agit de silice, a de préférence une surface BET comprise entre 45 et 400 $m^2/g$, plus préférentiellement comprise entre 60 et 300 $m^2/g$.

De préférence, le taux de charge renforçante dans la composition est compris entre 30 et 150 pce, plus préférentiellement entre 50 et 120 pce. L'optimum est différent selon les applications particulières visées le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation, la charge renforçante comprend majoritairement de la silice, de préférence le taux de noir de carbone présent dans la composition étant compris entre 2 et 20 pce.

Selon un autre mode de réalisation de l'invention, le charge renforçante comprend majoritairement du noir de carbone.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) $$Z - A - S_x - A - Z,$$

dans laquelle:

- x est un entier de 2 à 8 (de préférence de 2 à 5) ;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Z répond à l'une des formules ci-après:

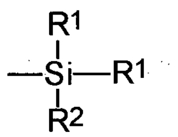 ; 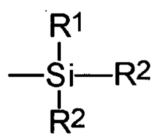 ; 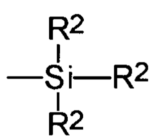 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_8$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane ($R^2$ = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534, WO2009/062733.

Dans la composition de caoutchouc, la teneur en agent de couplage est préférentiellement comprise entre 0,5 et 12 pce, plus préférentiellement entre 3 et 8 pce.

Typiquement le taux d'agent de couplage représente de 0,5% à 15% en poids par rapport à la quantité de charge inorganique.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

La composition selon l'invention peut également comprendre un agent de réticulation chimique.

La réticulation chimique permet la formation de liaisons covalentes entre les chaînes d'élastomère. La réticulation chimique peut se faire au moyen d'un système de vulcanisation ou bien au moyen de composés peroxydes.

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tétrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

De préférence, on utilise un accélérateur primaire du type sulfénamide.

Lorsque la réticulation chimique est effectuée au moyen d'un ou plusieurs composés peroxydes, le ou lesdits composés peroxydes représentent de 0,01 à 10 pce.

A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc selon l'invention peut comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone (telle que la Cire Ozone C32 ST), anti-ozonants chimiques, anti-oxydants (tel que la 6-paraphénylènediamine), des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, des promoteurs d'adhésion (sels de Cobalt par exemple).

De préférence, la composition selon l'invention comporte, à titre d'agent plastifiant préférentiel non aromatique ou très faiblement aromatique, au moins un composé choisi dans le groupe constitué par les huiles naphténiques,

paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

La composition selon l'invention peut également contenir, en complément des agents de couplage, des activateurs de couplage de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des $\alpha,\omega$-dihydroxy-polyorganosiloxanes (notamment des $\alpha,\omega$-dihydroxy-polydiméthylsiloxanes), des acides gras comme par exemple l'acide stéarique.

La composition de caoutchouc selon l'invention est fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé l'agent de réticulation chimique.

Selon un mode de réalisation préférentiel de l'invention, tous les constituants de base de la composition comprise dans le pneumatique de l'invention, à l'exception de l'agent de réticulation chimique, à savoir notamment la ou les charges renforçantes, l'agent de couplage le cas échéant, sont incorporés de manière intime, par malaxage, à l'élastomère diénique fonctionnalisé, et aux autres élastomères diéniques le cas échéant, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermoinécanique au cours de laquelle on introduit, dans un mélangeur approprié tel qu'un mélangeur interne usuel, tous les constituants nécessaires, les éventuels agents de mise en oeuvre complémentaires et autres additifs divers, à l'exception de l'agent de réticulation chimique. La durée totale du malaxage, dans cette phase non-productive, est de préférence comprise entre 1 et 15 min. Après refroidissement du mélange ainsi obtenu au cours de la première phase non-productive, on incorpore alors l'agent de réticulation chimique à basse température, généralement dans un mélangeur externe tel qu'un mélangeur à cylindres, le tout est alors mélangé (phase productive) pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

L'invention a encore pour objet un article semi-fini en caoutchouc pour pneumatique, comprenant la composition de caoutchouc, réticulée ou réticulable, selon l'invention. De préférence, ledit article est une bande de roulement.

L'invention a enfin pour objet un pneumatique comportant un article semi-fini selon l'invention.

L'invention est illustrée par les exemples qui suivent.

Exemple

1- <u>Préparation d'une matrice élastomère selon l'invention</u>

1.1- <u>Mesures et tests utilisés - Techniques expérimentales utilisées pour la caractérisation avant cuisson des polymères obtenus :</u>

(a) Détermination de la distribution de masses molaires par la technique de chromatographie d'exclusion stérique (SEC conventionnelle)

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en

poids (Mw) et la (Mp) masse au pic peuvent être déterminées et l'indice de polymolécularité (Ip = Mw/Mn) calculé via un étalonnage dit de MOORE.

(1) Préparation du polymère:

Il n'y a pas de traitement particulier de l'échantillon de polymère avant analyse. Celui-ci est simplement solubilisé dans du tétrahydrofuranne à une concentration d'environ 1 g/l. Puis la solution est filtrée sur filtre de porosité 0,45 μm avant injection.

(2) Analyse SEC :

L'appareillage utilisé est un chromatographe « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».

Le volume injecté de la solution de l'échantillon de polymère est 100 μl. Le détecteur est un réfractomètre différentiel « WATERS 2410 » et le logiciel d'exploitation des données chromatographiques est le système « WATERS EMPOWER».

Les masses molaires moyennes calculées sont relatives à une courbe d'étalonnage réalisée avec des étalons de Polystyrène de masses molaires connues.

(b) Détermination du pourcentage massique d'une population de chaînes polymères par la technique de chromatographie d'exclusion stérique haute résolution (Analyse SEC HR)

(1) Préparation du polymère:

Il n'y a pas de traitement particulier de l'échantillon de polymère avant analyse. Celui-ci est simplement solubilisé dans du tétrahydrofuranne à une concentration d'environ 1 g/l. Puis la solution est filtrée sur filtre de porosité 0,45μm avant injection.

(2) Analyse SEC HR :

L'appareillage utilisé est une chaîne chromatographique « WATERS alliance ». Le solvant d'élution est le tétrahydrofuranne, le débit de 0,2 ml/min, la température du système de 35° C et la durée d'analyse de 205 min. Un jeu de 3 colonnes SHODEX en série de dénomination commerciale « KF805 » est utilisé.

Le volume injecté de la solution de l'échantillon de polymère est 50 μl. Le détecteur est un réfractomètre différentiel « WATERS 2410 » et le logiciel d'exploitation des données chromatographiques est le système « WATERS EMPOWER».

Le chromatogramme obtenu est composé de plusieurs pics distincts. A chaque pic correspond une population de chaînes polymères.

La valeur du signal réfractométrique au niveau de la ligne de base est nul.

Les pourcentages massiques de chaque population sont déterminés par le rapport de la valeur du signal réfractométrique en sommet de pic de la population concernée par la somme des valeurs du signal réfractométrique en sommet de pic de toutes les populations.

(c) Pour les polymères et les compositions de caoutchouc, les viscosités Mooney ML (1+4) à 100 °C sont mesurées selon la norme ASTM D-1646.

Un consistomètre oscillant est utilisé tel que décrit dans la norme ASTM D-1646. La mesure de plasticité Mooney se fait selon le principe suivant : la composition à l'état cru (i.e. avant cuisson) est moulée dans une enceinte cylindrique chauffée à 100 °C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en « unité Mooney » (UM, avec 1 UM = 0,83 N.m).

(d) Les températures de transition vitreuse Tg des polymères sont mesurées selon la norme ASTM D3418-03 au moyen d'un calorimètre différentiel (« differential scanning calorimeter »).

(e) La spectroscopie proche infrarouge (NIR) est utilisée pour déterminer quantitativement le taux massique de

styrène dans l'élastomère ainsi que sa microstructure (répartition relative des unités butadiène 1,2-vinyl, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN 13C. Le taux de styrène et la microstructure sont alors calculés à partir du spectre NIR d'un film d'élastomère d'environ 730 $\mu$m d'épaisseur. L'acquisition du spectre est réalisée en mode transmission entre 4000 et 6200 $cm^{-1}$ avec une résolution de 2 $cm^{-1}$, à l'aide d'un spectromètre proche infrarouge à transformée de Fourier Bruker Tensor 37 équipé d'un détecteur InGaAs refroidi par effet Peltier.

(f) Pour les polymères, la viscosité inhérente à 25 °C d'une solution de polymère à 0,1 g/dl dans le toluène, est mesurée à partir d'une solution de polymère sec :
La viscosité inhérente est déterminée par la mesure du temps d'écoulement de la solution de polymère et du temps d'écoulement to du toluène, dans un tube capillaire.
Dans un tube Ubbelhode (diamètre du capillaire 0,46 mm, capacité 18 à 22 ml), placé dans un bain thermostaté à 25 ± 0,1 °C, le temps d'écoulement du toluène et celui de la solution polymère à 0,1 g/dl sont mesurés.
La viscosité inhérente est obtenue par la relation suivante :

$$\eta_{inh} = \frac{1}{C} \ln\left[\frac{(t)}{(t_o)}\right]$$

avec :

C concentration de la solution toluénique de polymère en g/dl ;
t : temps d'écoulement de la solution toluénique de polymère en secondes ;
$t_o$ : temps d'écoulement du toluène en secondes ;
$\eta_{inh}$ : viscosité inhérente exprimée en dl/g.

(g) Pour les polymères le cold flow : CF100(1+6) est issu de la méthode de mesure suivante :

Il s'agit de mesurer le poids de gomme extrudé à travers une filière calibrée pendant un temps donné (6 heures), dans des conditions fixées (à 100°C). La filière a un diamètre de 6,35 mm pour une épaisseur de 0,5 mm.

L'appareillage de cold-flow est une coupe cylindrique, percée au fond. On place dans ce dispositif environ 40g ± 4g de gomme préalablement préparée sous forme de pastille (2 cm d'épaisseur et 52 mm de diamètre). Sur la pastille de gomme, on positionne un piston calibré de 1 kg (± 5 g). L'ensemble est ensuite placé dans une étuve, stabilisée thermiquement à 100°C ± 0,5 °C.

Pendant la première heure en étuve, les conditions de mesures ne sont pas stabilisées. Après une heure, on découpe donc le produit qui s'est extrudé et on le jette.

La mesure dure ensuite 6 heures ± 5 mn, pendant lesquelles le produit est laissé en étuve. A la fin des 6 heures, il faut récupérer l'échantillon de produit extrudé en le découpant au ras de la surface du fond. Le résultat de l'essai est le poids de gomme pesé.

1.2- Préparation des élastomères fonctionnalisés selon l'invention et témoin des élastomères

(a) Préparation d'un polyisoprène vivant

Le polyisoprène vivant est préparé en discontinu dans un réacteur de 75L de volume réactionnel, sous pression d'azote, qui est muni d'un agitateur de type turbine. On introduit dans ce réacteur, d'une part, du méthylcyclohexane et de l'isoprène selon les rapports massiques respectifs de 100/25 et, d'autre part, une quantité de 10 000 $\mu$mol de sec-butyllithium actif (s-BuLi) pour 100 g d'isoprène.

La température du réacteur est maintenue à 45 °C et après un temps de polymérisation de 30 min la conversion en monomères est de 100 %.

La concentration de polyisoprènylthium (PILi) actif est déterminée sur un prélèvement, par titrages successifs avec l'acide perchlorique où l'activité de ce polyisoprène vivant est calculée par différence entre la basicité totale et la basicité résiduelle :

- Dosage de la basicité totale : introduire environ 1000 μmol de PILi (solution à doser) et introduire 25 mL d'acide acétique dans 50 mL de toluène. Introduire quelques gouttes d'une solution acétique de cristal violet. Doser par l'acide perchlorique (0,1M dans l'acide acétique), la solution passe du violet au vert émeraude au point d'équivalence puis au jaune lorsque l'on a dépassé le point équivalent.
- Dosage de la basicité résiduelle : introduire environ 1000 μmol de 1-4 transdibromobutène-2. Introduire environ 1000 μmol de PILi (solution à doser) dans 50 mL de toluène. Apres 10 minutes, ajouter 25mL d'acide acétique et introduire quelques gouttes d'une solution acétique de cristal violet. Doser par l'acide perchlorique (0,1M dans l'acide acétique), la solution passe du violet au vert émeraude au point d'équivalence puis au jaune lorsque l'on a dépassé le point équivalent.
- Résultats : la concentration du polyisoprènylthium actif est calculé selon :

$$t\,PILi = \frac{(V_T - V_R)}{V\,PI_{Li}} \times t_{HClO4}$$

Où,
VT = volume d'$HClO_4$ nécessaire pour le dosage de la basicité totale (en mL)
VR = volume d'$HClO_4$ nécessaire pour le dosage de la basicité résiduelle (en mL)
t$HClO_4$ = concentration de la solution d'acide perchlorique (en mole/L)
V PILi = volume de la solution de PILi ayant servi pour la prise d'essai (en mL)
tPILi = concentration de la solution de PILi analysée (en mole/L)

La concentration du polyisoprène vivant est ainsi estimée à 0,0157 mole/L. Ce polyisoprène lithié est stocké sous azote à une température de 10°C. Aucune évolution du titre n'est observée, pendant un stockage de plusieurs semaines sous pression d'azote à cette température.

La masse moléculaire en nombre et l'indice de polydispersité du polyisoprène vivant ainsi obtenu, laquelle est déterminée par SEC conventionnelle sur un prélèvement stoppé par un équivalent lithium de méthanol, sont de 9307 g/mol et de 1,07 respectivement.

Le taux d'enchaînements 3,4 de ce polyisoprène est de 23,7 %.

(b) <u>Préparation d'un élastomère A témoin (noté SBR A) copolymérisation du butadiène et du styrène initiée par un polyisoprène vivant</u>

Le copolymère bloc autre que ledit polyisoprène vivant est préparé en discontinu dans un réacteur de 75L de volume réactionnel, sous pression d'azote, qui est muni d'un agitateur de type turbine. On introduit dans ce réacteur du méthylcyclohexane, du butadiène et du styrène, selon des proportions massiques respectives de 100/10/6,6. On ajoute également dans ce réacteur 600 parties par million (en poids) de tétrahydrofurane (THF) à titre d'agent promoteur de liaisons vinyliques.

On introduit dans le réacteur une quantité de 57 μmol de n-butyllithium actif (n-BuLi) par 100 g de solution afin de neutraliser les impuretés protiques qui sont apportées par les différents constituants présents dans le réacteur dans le but de limiter la formation de polyisoprène mort ou désactivé lors de l'introduction de la solution de polyisoprène vivant dans le réacteur.

On introduit 545 μmol pour 100 g de monomères du polyisoprène vivant décrite au paragraphe 1-2) (a) représentant la quantité d'initiateur actif pour amorcer la polymérisation.

La température du réacteur est maintenue à 50°C et après un temps de polymérisation de 35 min la conversion en monomères est de 70 %.

La viscosité inhérente du copolymère avant fonctionnalisation mesurée sur un prélèvement stoppé par un équivalent lithium de méthanol est de 1,2 dl/g et la masse moléculaire en nombre et l'indice de polydispersité du même prélèvement, lesquels sont déterminés par SEC conventionnelle, sont de 106424 g/mol et 1,07 respectivement.

Dans le même réacteur, on ajoute ensuite 262 μmol/100 g de monomères d'un agent de couplage constitué de dibutyldichloroétain. La réaction de fonctionnalisation est effectuée à 50°C. Après 20 min de cette réaction de couplage, on soumet le copolymère bloc ainsi fonctionnalisé à un traitement anti-oxydant, à l'aide de 0,8 pce de 2, 2'-méthylène-bis (4-méthyl-6-tertiobutylphénol) et de 0,2 pce de N-(1, 3-diméthylbutyl)-N'-phényl-p- phénylènediamine. On stoppe toute réaction par l'ajout de 2 équivalents lithium de méthanol.

On sépare le copolymère ainsi traité de sa solution par une opération de stripping à la vapeur d'eau, puis on

le sèche sur une machine à vis à 150°C pendant 15 sec, pour obtenir le copolymère fonctionnalisé A à blocs témoin.

La viscosité inhérente de ce copolymère A est de 1,96dl/g, et sa viscosité ML est de 84.

Le Cold Flow (fluage à froid) de ce copolymère A est de 3,3

Le bloc SBR de ce copolymère A contient 28,8 % de styrène (en masse) et, pour sa partie butadiénique, 25,2% de motifs vinyliques.

La température de transition vitreuse de ce copolymère A est de -50°C.

La masse moléculaire en nombre et l'indice de polydispersité de ce copolymère A, lesquels sont déterminés par SEC conventionnelle, sont de 166200 g/mol et de 1,12 respectivement.

Les pourcentages massiques de chaque population présente dans le copolymère A sont déterminés par SEC HR. On distingue 2 populations majoritaires : une population correspondante à 1 branche, d'une masse au pic d'environ 110000 g/mol et un pourcentage en poids d'environ 4% et, une population correspondante à 2 branches ou à un copolymère couplé, d'une masse au pic d'environ 210000 g/mol et un pourcentage en poids d'environ 96%.

(c) <u>Préparation d'un élastomère C selon l'invention (noté SBR C) : copolymérisation du butadiène et du styrène initiée par un polyisoprène vivant</u>

Le copolymère bloc autre que ledit polyisoprène vivant est préparé en discontinu dans un réacteur de 75L de volume réactionnel, sous pression d'azote, qui est muni d'un agitateur de type turbine. On introduit dans ce réacteur du méthylcyclohexane, du butadiène et du styrène, selon des proportions massiques respectives de 100/10/6,6. On ajoute également dans ce réacteur 600 parties par million (en poids) de tétrahydrofurane, (THF) à titre d'agent promoteur de liaisons vinyliques.

On introduit dans le réacteur une quantité de 45 μmol de n-butyllithium actif (n-BuLi) par 100 g de solution afin de neutraliser les impuretés protiques qui sont apportées par les différents constituants présents dans le réacteur dans le but de limiter la formation de polyisoprène mort ou désactivé lors de l'introduction de la solution de polyisoprène vivant dans le réacteur.

On introduit 550 μmol pour 100 g de monomères de la solution du polyisoprène vivant décrite au paragraphe 1-2) (a) représentant la quantité d'initiateur actif pour amorcer la polymérisation.

La température du réacteur est maintenue à 50°C et après un temps de polymérisation de 35 min la conversion en monomères est de 70 %.

La viscosité inhérente du copolymère avant fonctionnalisation mesurée sur un prélèvement stoppé par un équivalent lithium de méthanol est de 1,22 dl/g et la masse moléculaire en nombre et l'indice de polydispersité du même prélèvement, lesquels sont déterminés par SEC conventionnelle, sont de 105000 g/mol et 1,07 respectivement.

Dans le même réacteur, on ajoute ensuite 105,6 μmol/100 g de monomères d'un agent de couplage constitué de dibutyldichloroétain et 82,5 μmol/100 g de monomères d'un agent d'étoilage constitué de tétrachloroétain. Les réactions de fonctionnalisation sont effectuées à 50°C. Après 20 min de réaction, on soumet le copolymère bloc ainsi fonctionnalisé à un traitement anti-oxydant, à l'aide de 0,8 pce de 2, 2'-méthylène-bis (4-méthyl-6-tertiobutylphénol) et de 0,2 pce de N-(1, 3-diméthylbutyl)-N'-phényl-p- phénylènediamine. On stoppe toute réaction par l'ajout 2 équivalents lithium de méthanol.

On sépare le copolymère ainsi traité de sa solution par une opération de stripping à la vapeur d'eau, puis on le sèche sur une machine à vis à 150 °C pendant 15 sec pour obtenir l'élastomère fonctionnalisé C selon l'invention.

La viscosité inhérente de ce copolymère C est de 2,32 dl/g, et sa viscosité ML est de 105.

Le Cold Flow de ce copolymère C est de 0,2.

Le bloc SBR de ce copolymère C contient 28,9 % de styrène (en masse) et, pour sa partie butadiénique, 25,1% de motifs vinyliques.

La température de transition vitreuse de ce copolymère C est de -48°C.

La masse moléculaire en nombre et l'indice de polydispersité de ce copolymère C, lesquels sont déterminés par SEC conventionnelle, sont de 227000 g/mol et 1,30 respectivement.

Les pourcentages massiques de chaque population présente dans le copolymère C selon l'invention sont déterminés par SEC HR. On distingue 3 populations majoritaires : une population correspondante à 2 branches, copolymère à blocs a) selon l'invention, d'une masse au pic d'environ 220000 g/mol et un pourcentage en poids d'environ 55%, une population correspondante à un copolymère étoilé 4 branches, copolymère à blocs b) selon l'invention, d'une masse au pic d'environ 400000 g/mol et un pourcentage en poids d'environ 35% et une population correspondante à 1 branche, d'une masse au pic d'environ 115000 g/mol et un pourcentage en poids d'environ 10%. Cette dernière population peut être considéré comme le copolymère à blocs non fonctionnel c) selon l'invention en prenant compte du taux des agents de couplage et d'étoilage utilisés pour la fonctionnalisation,

(d) Préparation d'un élastomère B selon l'invention (noté SBR B) : mélange des copolymères A et C

L'élastomère B selon l'invention est préparé par mélange des élastomères A et C dans les proportions 1/3 et 2/3 respectivement. On prépare une solution avec du méthylcyclohexane et les élastomères A et C dans les proportions 100/3,7/7,3 respectivement.

Une fois que tout l'élastomère est solubilisé et la solution est homogène, on sépare l'élastomère ainsi obtenu de sa solution par séchage à l'étuve à 60°C, sous vide à 200 mmHg et sous atmosphère d'azote. Apres 24 heures on obtient l'élastomère B selon l'invention.

La viscosité inhérente de ce copolymère B est de 2,08 dl/g et sa viscosité ML est de 95.

Le Cold Flow de ce copolymère B est de 0,7.

Le bloc SBR de ce copolymère B contient 28,8 % de styrène (en masse) et, pour sa partie butadiénique, 25,0% de motifs vinyliques.

La température de transition vitreuse de ce copolymère B est de -47,8°C.

La masse moléculaire en nombre et l'indice de polydispersité de ce copolymère B, lesquels sont déterminés par SEC conventionnelle, sont de 213400 g/mol et 1,26 respectivement.

Les pourcentages massiques de chaque population présente dans le copolymère B selon l'invention sont déterminés par SEC HR. On distingue 3 populations majoritaires : une population correspondante à 2 branches, copolymère à bloc a) selon l'invention, d'une masse au pic d'environ 225000 g/mol et un pourcentage en poids d'environ 64% ; une population correspondante à un copolymère étoilé 4 branches, copolymère à bloc b) selon l'invention, d'une masse au pic d'environ 410000 g/mol et un pourcentage en poids d'environ 24% et une population correspondante à 1 branche, d'une masse au pic d'environ 115000 g/mol et un pourcentage en poids d'environ 12%. Cette dernière population peut être considéré comme le copolymère à bloc non fonctionnel c) selon l'invention en prenant compte du taux des agents de couplage et d'étoilage utilisés pour la fonctionnalisation.

Exemples comparatifs de compositions de caoutchouc

A) Mesures et tests utilisés

a) la viscosité Mooney ML (grand plateau) ou MS (petit plateau) (1+4) à 100° C : mesurée selon la norme ASTM: D-1646, intitulée " Mooney ",

(b) la dureté SHORE A mesures effectuées selon la norme DIN 53505,

(c) les essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure à 60°C ± 2°C en première élongation les modules sécants nominaux (ou contraintes apparentes, en MPa) à 10%, 100% et 300% d'allongement notés respectivement MSA10, MSA100 et MSA300. Les contraintes à la rupture (FR) en MPa et les allongements à la rupture (AR) en % sont mesurés à 60°C ± 2°C, selon la norme NF T 46-002,

(d) les propriétés dynamiques $\Delta G^*$ et $\tan(\delta)$max sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 $mm^2$ de section), soumis à une sollicitation sinusoïdale en cisaillement simple alterné, à la fréquence de 10 Hz, dans les conditions normales de température (23°C) selon la norme ASTM D 1349-99, ou selon les cas à une température différente (60°C). On effectue un balayage en amplitude de déformation crête-crête de 0,1 à 50% (cycle aller), puis de 50% à 0,1% (cycle retour). Les résultats exploités sont le module complexe de cisaillement dynamique ($G^*$) et le facteur de perte $\tan(\delta)$. Pour le cycle retour, on indique la valeur maximale de $\tan(\delta)$ observée ($\tan(\delta)$max), ainsi que l'écart de module complexe ($\Delta G^*$) entre les valeurs à 0,1 et 50% de déformation (effet Payne).

(e) pour les polymères, le cold flow CF100(1+6) est issu de la méthode de mesure suivante : il s'agit de mesurer le poids de gomme extrudé à travers une filière calibrée pendant un temps donné (6 heures), dans des conditions fixées (à 100°C). La filière a un diamètre de 6,35 mm pour une épaisseur de 0,5 mm.

L'appareillage de cold flow est une coupe cylindrique, percée au fond. On place dans ce dispositif environ 40g ± 4g de gomme préalablement préparée sous forme de pastille (2 cm d'épaisseur et 52 mm de diamètre). Sur la pastille de gomme, on positionne un piston calibré de 1 kg (± 5 g). L'ensemble est ensuite placé dans une étuve, stabilisée thermiquement à 100°C ± 0,5 °C.

Pendant la première heure en étuve, les conditions de mesures ne sont pas stabilisées. Après une heure, on découpe donc le produit qui s'est extrudé et on le jette. La mesure dure ensuite 6 heures ± 5 mn, pendant lesquelles le produit est laissé en étuve. A la fin des 6 heures, il faut récupérer l'échantillon de produit extrudé en le découpant au ras de la surface du fond. Le résultat de l'essai est le poids de gomme pesé.

B) Exemple

Dans cet exemple, les trois élastomères SBR A, SBR B et SBR C ont été utilisés pour la préparation de compositions de caoutchouc A, B et C, comprenant chacune du noir de carbone à titre de charge renforçante.

Chacune de ces compositions A, B et C présente la formulation suivante (exprimée en pce : parties pour cent parties d'élastomère) :

| | |
|---|---|
| Elastomère | 100 |
| N234 | 54 |
| Paraffine | 1 |
| Anti-oxydant (1) | 4 |
| Acide stéarique | 1.5 |
| ZnO | 3 |
| Soufre | 1.3 |
| Accélérateur (2) | 1.3 |
| (1) N-1,3 diméthylbutyl N-phénylparaphénylènediamine (6-PPD)<br>(2) N-cyclohexyl-2-benzothiazylsulfénamide (CBS) | |

Chacune des compositions suivantes est réalisée, dans un premier temps, par un travail thermo-mécanique, puis, dans un second temps de finition, par un travail mécanique.

On introduit successivement, dans un mélangeur interne de laboratoire de type "Banbury', dont la capacité est de 400 $cm^3$, qui est rempli à 75% et dont la température initiale est d'environ 70°C, l'élastomère, le noir, la paraffine, l'antioxydant, l'acide stéarique et le monoxyde de zinc. On conduit l'étape de travail thermo-mécanique pendant 5 à 6 minutes, jusqu'à une température maximale de tombée de 160°C environ. Le premier temps précité de travail thermo-mécanique est ainsi réalisé, étant précisé que la vitesse moyenne des palettes lors de ce premier temps est de 70 tours/min.

On récupère le mélange ainsi obtenu, on le refroidit puis, dans un mélangeur externe (homo-finisseur), on ajoute le soufre et l'accélérateur à 30°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou de fines feuilles de caoutchouc, pour la mesure de leurs propriétés physiques ou mécaniques. La vulcanisation est conduite pendant 15 minutes à 150°C.

On compare entre elles les propriétés de ces trois compositions tant à l'état non vulcanisé que vulcanisé. Les résultats sont consignés dans le tableau suivant :

| Composition | A | B | C |
|---|---|---|---|
| Elastomère | SBR A | SBR B | SBR C |
| Mp Masse au pic de la branche élastomère [AB] | 110000 | 115000 | 115000 |
| ML(1+4) 100°C (élastomère) | 84 | 95 | 105 |
| CF100(1+6) (élastomère) | 3,3 | 0,7 | 0,2 |
| Propriétés à l'état non vulcanisé : | | | |
| MS(1+4) 100°C (mélange) | 58 | 61 | 64 |
| Propriétés à l'état vulcanisé : | | | |
| Shore A | 67 | 67 | 68 |

(suite)

| Composition | A | B | C |
|---|---|---|---|
| MSA10 | 5,85 | 5,83 | 5,93 |
| MSA100 | 2,70 | 2,66 | 2,69 |
| MSA300 | 5,35 | 5,18 | 5,27 |
| MSA300/MSA100 | 1,98 | 1,95 | 1,96 |
| Pertes 60°C (%) | 23 | 23 | 23 |
| Fraction : | | | |
| FR (MPa) | 21 | 19 | 21 |
| AR (%) | 356 | 338 | 364 |
| Propriétés dynamiques en fonction de la déformation : | | | |
| $\Delta G^*$ (MPa) à 60°C | 1,37 | 1,51 | 1,42 |
| $Tan\delta_{max}$ à 60°C | 0,146 | 0,153 | 0,146 |

On notera que les élastomères diéniques fonctionnalisés B et C selon l'invention présentent des valeurs de cold flow inférieures à celle de l'élastomère diénique fonctionnalisé A témoin. Les élastomères diéniques fonctionnalisés B et C selon l'invention présentent donc un fluage à froid amélioré par rapport à l'élastomère diénique fonctionnalisé A témoin.

Par ailleurs, les compositions B et C selon l'invention, à base desdits élastomères diéniques fonctionnalisés B et C, présentent une valeur de Mooney "mélange" proche de celle de la composition témoin A à base de l'élastomère diénique fonctionnalisé A au regard de la différence de longueur de branche observée. Les compositions B et C selon l'invention et témoin A présentent donc une aptitude à la mise en oeuvre à l'état non vulcanisé équivalente.

Concernant les propriétés à l'état vulcanisé, les compositions B et C selon l'invention et témoin A présentent des propriétés équivalentes et notamment des propriétés hystérétiques proches.

En d'autres termes, les compositions B et C selon l'invention, à base desdits élastomères diéniques fonctionnalisés B et C, présentent des propriétés de caoutchouterie à l'état non réticulé et à l'état réticulé qui sont équivalentes par rapport à celles de la composition A à base de l'élastomère diénique fonctionnalisé A témoin, le fluage à froid étant par ailleurs amélioré pour les élastomères diéniques fonctionnalisés B et C selon l'invention par rapport à l'élastomère diénique fonctionnalisé A témoin.

## Revendications

**1.** Elastomère diénique fonctionnalisé composé :

a) d'un copolymère à blocs fonctionnalisé en extrémité de chaîne ou en milieu de chaîne par une fonction étain et répondant à la formule suivante :

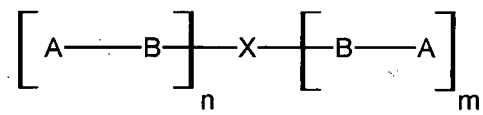

où n et m sont des entiers supérieurs ou égaux à 0 et tels que n+m=1 ou 2.

b) d'un copolymère à blocs étoilé étain répondant à la formule suivante :

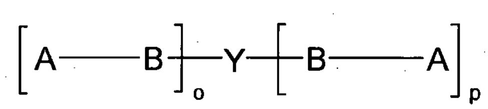

où o et p sont des entiers supérieurs ou égaux à 0 et tels que o+p≥3 et o+p≤6,

c) d'un taux inférieur à 15% en poids par rapport au poids total de l'élastomère diénique fonctionnalisé d'un copolymère à blocs non fonctionnel étain répondant à la formule suivante :

[A-B]

Où :

- tous les blocs A sont constitués d'un polyisoprène ou tous les blocs A sont constitués d'un polybutadiene,
- les blocs B sont constitués d'un élastomère diénique dont le taux molaire d'unités issues de diènes conjugués est supérieur à 15%, les blocs B étant identiques entre eux,
- X, Y représentent indépendamment un groupe contenant de l'étain,
- la masse moléculaire moyenne en nombre Mn1 de chaque bloc A varie de 2 500 à 20 000 g/mol,
- la masse moléculaire moyenne en nombre Mn2 de chaque bloc B varie de 80 000 à 350 000 g/mol,
- le taux d'enchaînements 1,2 dans chaque bloc A est compris entre 1 et 20% dans le cas où A est un bloc polybutadiène,
- le taux d'enchaînements 3,4 dans chaque bloc A est compris entre 1 et 25% dans le cas où A est un bloc polyisoprène,
- le copolymère A-B présente une distribution de masses moléculaires monomodale avant fonctionnalisation éventuelle ou étoilage éventuel et un indice de polydispersité avant fonctionnalisation éventuelle ou étoilage éventuel inférieur ou égal à 1,3.

2. Elastomère selon la revendication 1 **caractérisé en ce qu'**il comprend 5% à 45%, de préférence 10% à 30% en poids, par rapport au poids total de l'élastomère diénique fonctionnalisé, dudit copolymère à blocs étoilé étain b).

3. Elastomère selon la revendication 1 ou 2 **caractérisé en ce qu'**il comprend un taux strictement supérieur à 0% en poids et inférieur à 10% en poids, de préférence un taux inférieur à 5% en poids par rapport au poids total de l'élastomère diénique fonctionnalisé dudit copolymère à blocs non fonctionnel étain c).

4. Elastomère selon l'une quelconque des revendications précédentes **caractérisé en ce que** le rapport de la masse moléculaire moyenne en nombre Mn1 de chaque bloc polybutadiène ou polyisoprène A d'extrémité sur la masse moléculaire moyenne en nombre Mn2 de chacun des blocs B varie de 5 à 20%.

5. Elastomère selon l'une quelconque des revendications précédentes **caractérisé en ce que** la fonctionnalisation du copolymère a) est obtenue avec un agent de fonctionnalisation mono-halogénoétain ou de couplage di-halogénoétain.

6. Elastomère selon l'une quelconque des revendications précédentes **caractérisé en ce que** l'étoilage est obtenu avec un agent d'étoilage tri ou tétra-halogénoétain.

7. Elastomère selon l'une quelconque des revendications précédentes **caractérisé en ce que** le ou les blocs B sont choisis parmi les copolymères du styrène et du butadiène, les copolymères du styrène et de l'isoprène, les copolymères du butadiène et de l'isoprène les terpolymères de styrène/butadiène/isoprène, le polyisoprène lorsque le bloc A voisin est un polybutadiène, et le polybutadiène lorsque le bloc A voisin est un polyisoprène.

8. Elastomère selon l'une quelconque des revendications précédentes **caractérisé en ce que** le copolymère à blocs a) est un copolymère fonctionnalisé par une fonction étain en milieu de chaîne et le copolymère à blocs b) est un copolymère étoilé étain à 4 branches.

9. Elastomère selon l'une quelconque des revendications 1 à 8 **caractérisé en ce que** A est le polyisoprène, B est un copolymère du styrène et du butadiène, le copolymère à blocs a) étant fonctionnalisé par l'agent de fonctionnalisation $Bu_2SnCl_2$ et le copolymère à blocs b) étant étoilé par l'agent d'étoilage $SnCl_4$.

10. Elastomère selon l'une quelconque des revendications 1 à 8 **caractérisé en ce que** A est le polybutadiène, B est un copolymère du styrène et du butadiène, le copolymère à blocs a) étant fonctionnalisé par l'agent de fonctionnalisation $Bu_2SnCl_2$ et le copolymère à blocs b) étant étoilé par l'agent d'étoilage $SnCl_4$.

11. Composition de caoutchouc renforcée à base d'au moins une charge renforçante et d'une matrice élastomère, **caractérisée en ce que** la matrice élastomère comprend au moins un élastomère diénique fonctionnalisé tel que défini dans l'une quelconque des revendications 1 à 10.

12. Composition selon la revendication 11 **caractérisé en ce que** la matrice élastomère comprend également au moins

un élastomère diénique différent dudit élastomère diénique fonctionnalisé.

**13.** Composition selon la revendication 11 ou 12 **caractérisé en ce qu'**elle comprend un agent de réticulation chimique.

**14.** Article semi-fini en caoutchouc pour pneumatique, **caractérisé en ce qu'**il comprend une composition de caoutchouc, réticulable ou réticulée, telle que définie dans l'une quelconque des revendications 11 à 13.

**15.** Article semi-fini selon la revendication 14 **caractérisé en ce que** ledit article est une bande de roulement.

**16.** Pneumatique **caractérisé en ce qu'**il comporte un article semi-fini tel que défini dans la revendication 14 ou 15.

**Patentansprüche**

**1.** Funktionalisiertes Dienelastomer aus:

a) einem Blockcopolymer, das am Kettenende oder in der Kettenmitte durch eine Zinnfunktion funktionalisiert ist und der folgenden Formel entspricht:

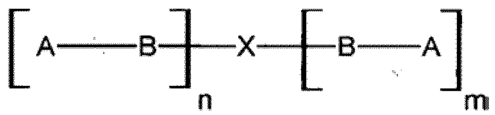

wobei n und m für ganze Zahlen größer gleich 0 stehen und so beschaffen sind, dass n + m = 1 oder 2,
b) einem über Zinn sternverzweigten Blockcopolymer, das der folgenden Formel entspricht:

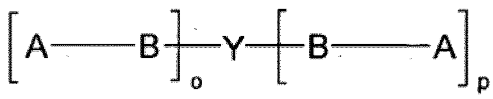

wobei o und p für ganze Zahlen größer gleich 0 stehen und so beschaffen sind, dass $o + p \geq 3$ und $o + p \leq 6$,
c) einem Gehalt von weniger als 15 Gew.-%, bezogen auf das Gesamtgewicht des funktionalisierten Dienelastomers, eines nicht zinnfunktionellen Blockcopolymers, das der folgenden Formel entspricht:

[A—B]

wobei:

- alle A-Blöcke aus einem Polyisopren bestehen oder alle A-Blöcke aus einem Polybutadien bestehen,
- die B-Blöcke aus einem Dienelastomer, dessen molarer Anteil an Einheiten, die aus konjugierten Dienen hervorgehen, über 15% liegt, bestehen, wobei die B-Blöcke miteinander identisch sind,
- X und Y unabhängig für eine Zinn enthaltende Gruppe stehen,
- das zahlenmittlere Molekulargewicht Mn1 jedes A-Blocks von 2500 bis 20.000 g/mol variiert,
- das zahlenmittlere Molekulargewicht Mn2 jedes B-Blocks von 80.000 bis 350.000 g/mol variiert,
- in dem Fall, dass A ein Polybutadienblock ist, der Gehalt an 1,2-Verknüpfungen in jedem A-Block zwischen 1 und 20% liegt,
- in dem Fall, dass A ein Polyisoprenblock ist, der Gehalt an 3,4-Verknüpfungen in jedem A-Block zwischen 1 und 25% liegt,
- das A-B-Copolymer vor fakultativer Funktionalisierung oder fakultativer Sternverzweigung eine monomodale Molekulargewichtsverteilung und einen Polydispersitätsindex vor fakultativer Funktionalisierung oder fakultativer Sternverzweigung kleiner gleich 1,3 aufweist.

**2.** Elastomer nach Anspruch 1, **dadurch gekennzeichnet, dass** es 5 bis 45 Gew.-%, vorzugsweise 10 bis 30 Gew.-%, bezogen auf das Gesamtgewicht des funktionalisierten Dienelastomers, des über Zinn sternverzweigten Blockcopolymers b) umfasst.

3. Elastomer nach Anspruch 1 oder 2, **dadurch gekennzeichnet, dass** es einen Gehalt, der streng über 0 Gew.-% und unter 10 Gew.-% liegt, vorzugsweise einen Gehalt von weniger als 5 Gew.-%, bezogen auf das Gesamtgewicht des funktionalisierten Dienelastomers, des nicht zinnfunktionellen Blockcopolymers c) umfasst.

4. Elastomer nach einem der vorhergehenden Ansprüche, **dadurch gekennzeichnet, dass** das Verhältnis des zahlenmittleren Molekulargewichts Mnl jedes Polybutadien- oder Polyisopren-Endblocks A zum zahlenmittleren Molekulargewicht Mn2 jedes der B-Blöcke von 5 bis 20% variiert.

5. Elastomer nach einem der vorhergehenden Ansprüche, **dadurch gekennzeichnet, dass** die Funktionalisierung des Copolymers a) mit einem Monohalogenzinn-Funktionalisierungsmittel oder Dihalogenzinn-Kupplungsmittel erhalten wird.

6. Elastomer nach einem der vorhergehenden Ansprüche, **dadurch gekennzeichnet, dass** die Sternverzweigung mit einem Tri- oder Tetrahalogenzinn-Sternverzweigungsmittel erhalten wird.

7. Elastomer nach einem der vorhergehenden Ansprüche, **dadurch gekennzeichnet, dass** der bzw. die B-Blöcke aus Copolymeren von Styrol und Butadien, Copolymeren von Styrol und Isopren, Copolymeren von Butadien und Isopren, Styrol/Butadien/Isopren-Terpolymeren, Polyisopren, wenn der benachbarte A-Block ein Polybutadien ist, und Polybutadien, wenn der benachbarte A-Block ein Polyisopren ist, ausgewählt sind.

8. Elastomer nach einem der vorhergehenden Ansprüche, **dadurch gekennzeichnet, dass** das Blockcopolymer a) ein durch eine Zinnfunktion in der Kettenmitte funktionalisiertes Copolymer ist und das Blockcopolymer b) ein über Zinn sternverzweigtes Copolymer mit 4 Armen ist.

9. Elastomer nach einem der Ansprüche 1 bis 8, **dadurch gekennzeichnet, dass** A Polyisopren ist, B ein Copolymer von Styrol und Butadien ist, wobei das Blockcopolymer a) durch das Funktionalisierungsmittel $Bu_2SnCl_2$ funktionalisiert ist und das Blockcopolymer b) durch das Sternverzweigungsmittel $SnCl_4$ verzweigt ist.

10. Elastomer nach einem der Ansprüche 1 bis 8, **dadurch gekennzeichnet, dass** A Polybutadien ist, B ein Copolymer von Styrol und Butadien ist, wobei das Blockcopolymer a) durch das Funktionalisierungsmittel $Bu_2SnCl_2$ funktionalisiert ist und das Blockcopolymer b) durch das Sternverzweigungsmittel $SnCl_4$ verzweigt ist.

11. Verstärkte Kautschukzusammensetzung auf Basis mindestens eines verstärkenden Füllstoffs und einer Elastomermatrix, **dadurch gekennzeichnet, dass** die Elastomermatrix mindestens ein funktionalisiertes Dienelastomer gemäß einem der Ansprüche 1 bis 10 umfasst.

12. Zusammensetzung nach Anspruch 11, **dadurch gekennzeichnet, dass** die Elastomermatrix außerdem mindestens ein Dienelastomer, das von dem funktionalisierten Dienelastomer verschieden ist, umfasst.

13. Zusammensetzung nach Anspruch 11 oder 12, **dadurch gekennzeichnet, dass** sie ein chemisches Vernetzungsmittel umfasst.

14. Kautschuk-Halbzeug für Reifen, **dadurch gekennzeichnet, dass** es eine vernetzbare oder vernetzte Kautschukzusammensetzung gemäß einem der Ansprüche 11 bis 13 umfasst.

15. Halbzeug nach Anspruch 14, **dadurch gekennzeichnet, dass** es sich bei dem Halbzeug um eine Lauffläche handelt.

16. Reifen, **dadurch gekennzeichnet, dass** er ein Halbzeug gemäß einem der Ansprüche 14 oder 15 umfasst.

## Claims

1. Functionalized diene elastomer composed:

   a) of a block copolymer functionalized, at the chain end or in the middle of the chain, by a tin functional group and corresponding to the following formula:

$$\left[A—B\right]_n—X—\left[B—A\right]_m$$

where n and m are integers of greater than or equal to 0 and such that n+m=1 or 2,
b) of a block copolymer star-branched by tin and corresponding to the following formula:

$$\left[A—B\right]_o—Y—\left[B—A\right]_p$$

where o and p are integers of greater than or equal to 0 and such that o+p≥3 and o+p≤6,
c) of a content of less than 15% by weight, with respect to the total weight of the functionalized diene elastomer, of a non-tin-functional block copolymer corresponding to the following formula:

[A—B]

where:

- all the A blocks are composed of a polyisoprene or all the A blocks are composed of a polybutadiene,
- the B blocks are composed of a diene elastomer, the molar content of units resulting from conjugated dienes of which is greater than 15%, the B blocks being identical to one another,
- X and Y independently represent a tin-comprising group,
- the number-average molecular weight Mn1 of each A block varies from 2 500 to 20 000 g/mol,
- the number-average molecular weight Mn2 of each B block varies from 80 000 to 350 000 g/mol,
- the content of 1,2 linkages in each A block is between 1 and 20% in the case where A is a polybutadiene block,
- the content of 3,4 linkages in each A block is between 1 and 25% in the case where A is a polyisoprene block,
- the A-B copolymer exhibits a monomodal distribution of molecular weights before optional functionalization or optional star-branching and a polydispersity index before optional functionalization or optional star-branching of less than or equal to 1.3.

2. Elastomer according to Claim 1, **characterized in that** it comprises from 5% to 45% by weight, preferably from 10% to 30% by weight, with respect to the total weight of the functionalized diene elastomer, of the said block copolymer star-branched by tin b).

3. Elastomer according to Claim 1 or 2, **characterized in that** it comprises a content strictly of greater than 0% by weight and of less than 10% by weight, preferably a content of less than 5% by weight, with respect to the total weight of the functionalized diene elastomer, of the said non-tin-functional block copolymer c).

4. Elastomer according to any one of the preceding claims, **characterized in that** the ratio of the number-average molecular weight Mn1 of each end polybutadiene or polyisoprene block A to the number-average molecular weight Mn2 of each of the B blocks varies from 5 to 20%.

5. Elastomer according to any one of the preceding claims, **characterized in that** the functionalization of the copolymer a) is obtained with a monohalotin functionalization agent or a dihalotin coupling agent.

6. Elastomer according to any one of the preceding claims, **characterized in that** the star-branching is obtained with a tri- or tetrahalotin star-branching agent.

7. Elastomer according to any one of the preceding claims, **characterized in that** the B block or blocks are chosen from copolymers of styrene and butadiene, copolymers of styrene and isoprene, copolymers of butadiene and isoprene, styrene/butadiene/isoprene terpolymers, polyisoprene when the neighbouring A block is a polybutadiene and polybutadiene when the neighbouring A block is a polyisoprene.

8. Elastomer according to any one of the preceding claims, **characterized in that** the block copolymer a) is a copolymer

functionalized by a tin functional group in the middle of the chain and the block copolymer b) is a copolymer star-branched by tin having 4 branches.

**9.** Elastomer according to any one of Claims 1 to 8, **characterized in that** A is polyisoprene and B is a copolymer of styrene and butadiene, the block copolymer a) being functionalized by the functionalization agent $Bu_2SnCl_2$ and the block copolymer b) being star-branched by the star-branching agent $SnCl_4$.

**10.** Elastomer according to any one of Claims 1 to 8, **characterized in that** A is polybutadiene and B is a copolymer of styrene and butadiene, the block copolymer a) being functionalized by the functionalization agent $Bu_2SnCl_2$ and the block copolymer b) being star-branched by the star-branching agent $SnCl_4$.

**11.** Reinforced rubber composition based on at least one reinforcing filler and on an elastomer matrix, **characterized in that** the elastomer matrix comprises at least one functionalized diene elastomer as defined in any one of Claims 1 to 10.

**12.** Composition according to Claim 11, **characterized in that** the elastomer matrix also comprises at least one diene elastomer other than the said functionalized diene elastomer.

**13.** Composition according to Claim 11 or 12, **characterized in that** it comprises a chemical crosslinking agent.

**14.** Semi-finished article made of rubber for a tyre, **characterized in that** it comprises a crosslinkable or crosslinked rubber composition as defined in any one of Claims 11 to 13.

**15.** Semi-finished article according to Claim 14, **characterized in that** the said article is a tread.

**16.** Tyre, **characterized in that** it comprises a semi-finished article as defined in Claim 14 or 15.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2526030
- US 4848511 A
- EP 0709235 A
- FR 2740778
- US 5066721 A
- EP 1278789 A
- WO 9736724 A
- WO 9916600 A
- WO 2006069792 A
- WO 2006069793 A
- WO 0316837 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 2009062733 A
- WO 0210269 A


### Littérature non-brevet citée dans la description


- Nouvelles Recherches dans le Domaine des Composés Macromoléculaires. Pergamon Press Ltd, 1984, 343-56. 72
- **VILMIN, F. ; DUSSAP, C.; ; COSTE, N.** *Applied Spectroscopy,* 2006, vol. 60, 619-29